# EUROPÄISCHE PATENTSCHRIFT

(11) **EP 4 461 256 B1**
(45) Veröffentlichungstag und Bekanntmachung des Hinweises auf die Patenterteilung: **03.06.2026**
(21) Anmeldenummer: 23190677.7
(22) Anmeldetag: 09.08.2023
(51) Int. Cl.: A61C 5/73, A61C 13/083, A61C 13/09, A61C 13/225, A61C 13/265

(54) **ZAHNPROTHESE UND VERFAHREN ZUR HERSTELLUNG EINER ZAHNPROTHESE**
DENTAL PROSTHESIS AND METHOD FOR PRODUCING A DENTAL PROSTHESIS
PROTHÈSE DENTAIRE ET PROCÉDÉ DE FABRICATION D'UNE PROTHÈSE DENTAIRE

(30) Priorität: 08.05.2023 DE 102023111945
(43) Veröffentlichungstag der Anmeldung: 13.11.2024
(73) Patentinhaber: Klinkenberg, Veit, 77694 Kehl (DE); Karcher, Martin, 77855 Achern-Großweiher (DE)
(72) Erfinder: Klinkenberg, Veit, 77694 Kehl (DE); Karcher, Martin, 77855 Achern-Großweiher (DE)
(74) Vertreter: LBP Lemcke, Brommer & Partner Patentanwälte mbB

(56) Entgegenhaltungen:
- EP-A1- 2 893 917
- EP-A1- 3 669 820
- DE-A1- 102006 013 890

## Beschreibung

Die Erfindung betrifft eine Zahnprothese mit einer inneren und einer äußeren Zahnkrone, bei der die innere Zahnkrone und die äußere Zahnkrone dafür vorgesehen sind, um in einer Teleskopanordnung an einem Zahnstumpf oder einem Zahnimplantataufbau angeordnet zu werden sowie ein Verfahren zur Herstellung einer Zahnprothese.

Bei Zahnprothesen, welche beispielsweise aus EP 2 893 917 A1, DE 10 2006 013890 A1 oder EP 3 669 820 A1 bekannt sind, handelt es sich typischerweise um künstliche Vorrichtungen, die dazu dienen, fehlende oder beschädigte Zähne zu ersetzen. Zahnprothesen können grundsätzlich fest mit ihrem Träger verbunden oder herausnehmbar sein. Eine Mischform aus festen und herausnehmbaren Prothesen stellen sogenannte Teleskopprothesen dar, welche zumindest zwei Teile umfassen: eine Innen- und eine Außenkrone. Hierbei wird die Innenkrone auf einen oder mehrere Zahnstümpfe oder einen sog. Implantataufbau aufgesetzt und die Außenkrone auf die Innenkrone gesteckt.

EP 2 893 917 A1 beschreibt eine Zahnprothese mit zumindest einer inneren Zahnkrone und zumindest einer äußeren Zahnkrone, bei der die innere Zahnkrone und die äußere Zahnkrone dafür vorgesehen sind, um in einer Teleskopanordnung an einem Zahnstumpf oder einem Zahnimplantataufbau angeordnet zu werden, wobei in der Teleskopanordnung die innere Zahnkrone auf den Zahnstumpf oder den Zahnimplantataufbau gesteckt ist und die äußere Zahnkrone auf die innere Zahnkrone gesteckt ist, wobei die innere Zahnkrone und die äußere Zahnkrone ausgebildet sind, um in der Teleskopanordnung eine lösbare Verbindung nach der Art einer Presspassung auszubilden ist, und die innere Zahnkrone vollständig aus Keramik hergestellt ist, wobei die Zahnprothese zumindest teilweise als eine herausnehmbare Brücke ausgebildet ist, und mit einem Sattel, wobei zumindest eine der weiteren Zahnkronen mit dem Sattel verbunden ist und der Sattel als Auflage für zumindest eine der weiteren Zahnkronen auf einem Kiefer und/oder Zahnfleisch vorgesehen ist. DE 10 2006 013890 A1 beschreibt eine Zahnprothese mit zumindest einer inneren Zahnkrone und zumindest einer äußeren Zahnkrone, bei der die innere Zahnkrone und die äußere Zahnkrone dafür vorgesehen sind, um in einer Teleskopanordnung an einem Zahnstumpf oder einem Zahnimplantataufbau angeordnet zu werden, wobei in der Teleskopanordnung die innere Zahnkrone auf den Zahnstumpf oder den Zahnimplantataufbau gesteckt ist und die äu-βere Zahnkrone auf die innere Zahnkrone gesteckt ist, wobei die innere Zahnkrone und die äußere Zahnkrone ausgebildet sind, um in der Teleskopanordnung eine lösbare Verbindung nach der Art einer Presspassung auszubilden und die äußere Zahnkrone vollständig aus Keramik hergestellt ist und die innere Zahnkrone vollständig aus Keramik hergestellt. EP 3 669 820 A1 beschreibt eine Zahnprothese mit zumindest einer inneren Zahnkrone und zumindest einer äußeren Zahnkrone, bei der die innere Zahnkrone und die äußere Zahnkrone dafür vorgesehen sind, um in einer Teleskopanordnung an einem Zahnstumpf oder einem Zahnimplantataufbau angeordnet zu werden, wobei in der Teleskopanordnung die innere Zahnkrone auf den Zahnstumpf oder den Zahnimplantataufbau gesteckt ist und die äußere Zahnkrone auf die innere Zahnkrone gesteckt ist, wobei die innere Zahnkrone und die äußere Zahnkrone ausgebildet sind, um in der Teleskopanordnung eine lösbare Verbindung nach der Art einer Presspassung auszubilden ist und die innere Zahnkrone vollständig aus Keramik hergestellt ist und wobei die äußere Zahnkrone zusammen mit zumindest zwei weiteren benachbarten äußeren Zahnkronen einstückig und aus Keramik hergestellt ist, wobei die Zahnprothese zumindest teilweise als eine herausnehmbare Brücke ausgebildet ist, und mit einem Sattel, wobei zumindest eine der weiteren Zahnkronen mit dem Sattel verbunden ist und der Sattel als Auflage für zumindest eine der weiteren Zahnkronen auf einem Kiefer und/oder Zahnfleisch vorgesehen ist.

Ein Nachteil bekannter Teleskopprothesen besteht darin, dass die äußere Zahnkrone typischerweise von einem Gerüst gehalten werden muss, das aus einer Mehrzahl unterschiedlicher Materialien hergestellt ist, beispielsweise aus Kunststoff und Metall. Dies führt zu einer konstruktiv aufwändigen Bauweise der Teleskopprothese.

Darüber hinaus sind innere Zahnkronen typischerweise aus Metall hergestellt, welches unter der äußeren Zahnkrone zum Vorschein kommen kann oder wenn diese entfernt wird. Dies ist aus ästhetischen Gründen unerwünscht.

Der Erfindung liegt daher die Aufgabe zugrunde, eine Zahnprothese sowie ein Verfahren zu dessen Herstellung vorzuschlagen, mit der die oben genannten Nachteile überwunden werden können.

Die Aufgabe ist gelöst durch eine Zahnprothese gemäß Anspruch 1 sowie einem Verfahren nach dem Anspruch 12. Vorteilhafte Weiterbildungen sind Gegenstände abhängiger Unteransprüche.

Die erfindungsgemäße Zahnprothese weist in an sich bekannter Weise eine innere und eine äußere Zahnkrone auf. Die innere Zahnkrone und die äußere Zahnkrone sind dafür vorgesehen, um in einer Teleskopanordnung an einem Zahnstumpf oder einem Zahnimplantataufbau angeordnet zu werden. Dabei ist die innere Zahnkrone auf den Zahnstumpf oder den Zahnimplantataufbau gesteckt und die äußere Zahnkrone auf die innere Zahnkrone gesteckt.

Die erfindungsgemäße Zahnprothese unterscheidet sich dadurch von vorbekannten Zahnprothesen, dass die innere Zahnkrone und die äußere Zahnkrone ausgebildet sind, um in der Teleskopanordnung eine lösbare Verbindung nach der Art einer Presspassung auszubilden und die äußere Zahnkrone zusammen mit zumindest zwei weiteren benachbarten äußeren Zahnkronen einstückig und aus Keramik hergestellt ist, wobei die Zahnprothese zumindest teilweise als eine herausnehmbare Brücke ausgebildet ist. Die Zahnprothese umfasst derner einen Kunststoffsattel, wobei zumindest eine der weiteren Zahnkronen mit dem Kunststoffsattel verbunden ist und der Kunststoffsattel als Auflage für zumindest eine der weiteren Zahnkronen auf einem Kiefer und/oder Zahnfleisch vorgesehen ist. Die innere Zahnkrone ist vollständig aus Keramik hergestellt.

Die Erfindung beruht auf der Erkenntnis, dass durch Ausgestaltung der äußeren Zahnkrone aus Keramik und der inneren Zahnkrone aus Keramik die gängigen Nachteile vorbekannter Zahnprothesen behoben werden können.

Die Ausgestaltung der äußeren Zahnkrone aus Keramik geht mit ästhetischen Vorteilen einher. Denn bei Verwendung von Keramik lässt sich die äußere Zahnkrone mit geringem Aufwand an das individuelle optische Erscheinungsbild eines natürlichen Zahns anpassen. Darüber hinaus weist die äußere Zahnkrone aus Keramik mechanische Eigenschaften auf, die eine hohe Lebensdauer und gute Belastbarkeit ermöglichen. Zudem entsprechen die wärmeleitenden Eigenschaften einer äußeren Zahnkrone aus Keramik im Wesentlichen denen eines natürlichen Zahns, wodurch ein natürliches Wärme- und Kälteempfinden im Mundraum erreicht wird. Es liegt im Rahmen der Erfindung, dass die äußere Zahnkrone nach der Art eines Schneidezahns, eines Eckzahns, eines Prämolars oder eines Molars ausgebildet ist.

Die Verwendung von Keramik bei der Ausgestaltung der inneren Zahnkrone geht ebenfalls mit ästhetischen Vorteilen einher, da auch bei abgenommener äußerer Zahnkrone kein glänzendes Metall im Mundraum zu sehen ist. Vielmehr weist die innere Zahnkrone ein natürliches Erscheinungsbild auf, insbesondere wenn die Farbe der verwendeten Keramik an die Farbe natürlicher Zähne angepasst ist. Darüber hinaus entsteht auch bei einer aufgesteckten äußeren Zahnkrone kein Bereich, in dem die innere Zahnkrone aufgrund eines farblichen Kontrasts sichtbar ist, etwa im Bereich des Zahnfleisches. Die in Zusammenhang mit der äußeren Zahnkrone genannten Vorteile in Bezug auf die mechanischen und wärmeleitenden Eigenschaften gelten für die innere Zahnkrone entsprechend.

Im Rahmen der Erfindung kann die Presspassung als eine lösbare Verbindung zwischen der inneren und der äußeren Zahnkrone angesehen werden, bei der die äußere Zahnkrone vorzugsweise einen Hohlraum und die innere Zahnkrone eine zu dem Hohlraum korrespondierende Außenwandung aufweist und deren Abmessungen so gewählt sind, dass in der Teleskopanordnung eine kraftschlüssige Verbindung zwischen der äußeren und der inneren Zahnkrone ausgebildet ist. Durch Ausbildung der Presspassung ist es möglich, gänzlich auf zusätzliche Halteelemente, wie zum Beispiel ein Gerüst, an dem die äußeren Zahnkronen befestigt sind, zu verzichten. Dadurch ergibt sich im Vergleich zu vorbekannten Zahnprothesen ein erheblich einfacherer Aufbau. Nichtsdestotrotz liegt es im Rahmen der Erfindung, dass in der Teleskopanordnung zwischen der äußeren und der inneren Krone ein weiteres Element oder eine Materialschicht angeordnet sein kann. Ein derartiges Element oder die Materialschicht können dazu dienen, die Haltekraft der Presspassung und insbesondere der Stabilität der gesamten Prothese zu verbessern.

Die Verwendung von Keramik für die äußere Zahnkrone und die Verwendung von Keramik für die innere Zahnkrone geht mit mechanischen Vorteilen für die Presspassung einher. Insbesondere können die innere und die äußere Zahnkrone vergleichbare materialspezifische Wärmeausdehnungen aufweisen, sodass eine Temperaturschwankung zu einer entsprechend gleichmäßigen Ausdehnung der gesamten Zahnprothese führt.

Es ist eine weitere Erkenntnis, dass die Presspassung zwischen der inneren und der äußeren Zahnkrone derart dimensioniert werden kann, dass die äußere Zahnkrone unaufwändig auf die innere Zahnkrone steckbar ist, um die Teleskopanordnung auszubilden. Die dabei erzeugbare Haltekraft zwischen der inneren und der äußeren Zahnkrone ist hinreichend hoch, um die äußere Zahnkrone im alltäglichen Gebraucht sicher auf der inneren Zahnkrone zu halten. Darüber hinaus kann die äußere Zahnkrone unaufwändig und bei Bedarf von der inneren Zahnkrone gelöst werden, etwa zu Reinigungszwecken. Dies ist unabhängig davon erreichbar, ob die innere Zahnkrone aus Keramik hergestellt ist.

Im Rahmen der Erfindung kann der Zahnstumpf als Teil eines natürlichen Zahns angesehen werden, welcher am Kieferknochen befestigt ist und vorzugsweise präpariert ist, um mit der inneren Zahnkrone verbunden zu werden. Insbesondere kann der Zahnstumpf hierfür im Wesentlichen zylindrisch geschliffen sein.

Ein Zahnimplantataufbau kann im Rahmen der Erfindung als Teil eines Zahnimplantats angesehen werden, welcher integral oder differentiell mit dem Zahnimplantat verbunden ist. Der Zahnimplantataufbau kann auch als sogenanntes Abutment ausgestaltet sein, das beispielsweise an einem dem Kiefer abgewandten Ende eines Zahnimplantats angeordnet ist und zur Aufnahme der inneren Zahnkrone dient.

Wie oben bereits erwähnt, liegt es im Rahmen der Erfindung, dass die innere und die äußere Zahnkrone in der Teleskopanordnung unmittelbar miteinander in Kontakt sind oder durch ein zwischenliegendes Element oder eine Materialschicht voneinander getrennt sind. Insbesondere ist die gesamte Zahnprothese frei von Metall.

In einer vorteilhaften Weiterbildung weisen die äußere Zahnkrone einen zylindrischen Hohlraum und die innere Zahnkrone eine zylindrische Außenwandung auf.

Eine zueinander korrespondierende zylindrische Geometrie des Hohlraums und der Außenwandung geht mit Vorteilen bei der Presspassung einher, da die Haltekräfte gleichmäßig und über den gesamten Kontaktbereich zwischen der inneren und der äußeren Zahnkrone verteilt werden können.

In einer vorteilhaften Weiterbildung weist die innere Zahnkrone eine Aushöhlung auf, die dafür vorgesehen ist, um den Zahnstumpf oder den Implantataufbau aufzunehmen und stoffschlüssig, insbesondere mittels Klebung, mit diesem verbunden zu werden. Dadurch ist es möglich, den inneren Zahnstumpf dauerhaft und sicher im Mundraum zu fixieren.

In einer vorteilhaften Weiterbildung sind die äußere Zahnkrone und/oder die innere Zahnkrone jeweils vollständig aus Zirkon herstellt.

Bei Zirkon, welches insbesondere Zirkoniumoxid und/oder Zirkoniumdixod enthalten kann, handelt es sich um ein Material mit einer hohen spezifischen Härte und Festigkeit, wodurch es eine gute Eignung für den Einsatz als Zahnersatz aufweist. Ferner weist Zirkon eine gute Korrosionsbeständigkeit auf, wodurch es insbesondere unanfällig gegenüber Verfärbungen und dementsprechend ästhetisch ansprechend ist. Darüber hinaus weist Zirkon gegenüber gängigen Metallen, die in der Prothetik zum Einsatz kommen können, eine geringe Wärmeleitfähigkeit auf. Dies begünstigt seinen Einsatz in Zahnprothesen, da der Konsum von kalten oder heißen Nahrungsmitteln nicht oder nur langsam zu einem unangenehmen Temperaturempfinden am Zahnfleisch oder am Kiefer führt.

In einer vorteilhaften Weiterbildung ist die äußere Zahnkrone zusammen mit zumindest zwei, höchst vorzugsweise drei, insbesondere bevorzugt mehr als drei weiteren, benachbarten Zahnkronen, insbesondere äußeren Zahnkronen, einstückig und aus Keramik hergestellt.

Es ist eine weitere erfindungsbegründende Erkenntnis, dass eine Mehrzahl von Zahnkronen einstückig aus Keramik herstellbar sind. Hierbei kann beispielsweise lediglich eine von mehreren Zahnkronen als äußere Zahnkrone ausgebildet sein, während eine benachbarte Zahnkrone beliebig ausgebildet sein kann, insbesondere also nicht von einer inneren Zahnkrone gehalten sein muss. Stattdessen kann eine äußere Zahnkrone von einer inneren Zahnkrone gehalten sein, während die zumindest eine weitere, benachbarte Zahnkrone über ihre einstückige Verbindung zu der äußeren Zahnkrone gehalten wird. Beispielsweise können auch drei oder mehr Zahnkronen einstückig ausgebildet sein, wobei die randseitig angeordneten Zahnkronen einer künstlichen Zahnreihe als äußere Zahnkronen für eine Teleskopanordnung ausgebildet sind, während die nicht randseitig angeordneten, zwischenliegenden Zahnkronen von den randseitigen Zahnkronen gehalten sind. Auf diese Weise kann die Zahnprothese zumindest teilweise als eine Brücke ausgebildet werden, die insbesondere in den Mundraum eingesetzt und bei Bedarf wieder herausgenommen werden kann. Im Unterschied zu gängigen Brücken, ist es mittels der Erfindung möglich, die Brücke also nicht festsitzend, sondern vielmehr als herausnehmbare Brücke auszubilden. Vorzugsweise ist die äußere Zahnkrone oder eine der mit ihr verbundenen, benachbarten Zahnkronen nicht mittels eines Gerüsts, insbesondere eines Gerüst aus Metall, gehalten.

Es liegt im Rahmen der Erfindung, dass die äußere Zahnkrone und zumindest eine weitere benachbarte Zahnkrone als zusammenhängende Zahnreihe ausgebildet ist, welche zumindest zwei benachbarte Zähne umfasst, die jeweils nach der Art eines Schneidezahns oder Eckzahns oder Prämolars oder Molars ausgebildet sind.

Vorzugsweise ist die äußere Zahnkrone zusammen mit zumindest einer, vorzugsweise zwei, höchst vorzugsweise drei, insbesondere bevorzugt mehr als drei weiteren, benachbarten Zahnkronen, insbesondere äußeren Zahnkronen, einstückig und aus Keramik gefräst. Fräsen stellt sowohl in wirtschaftlicher Hinsicht als auch in Hinblick auf die erreichbare Bearbeitungsqualität ein zu bevorzugendes Verfahren dar, mit dem die erfindungsgemäße Zahnprothese herstellbar ist. Insbesondere haben Untersuchungen gezeigt, dass eine einstückig gefräste Anordnung von mehreren Zahnkronen eine außergewöhnlich hohe Stabilität aufweisen kann.

In einer vorteilhaften Weiterbildung weist die Zahnprothese einen Kunststoffsattel auf, wobei die zumindest eine weitere Zahnkrone mit dem Kunststoffsattel verbunden ist, und der Kunststoffsattel als Auflage für die weitere Zahnkrone auf einem Kiefer oder Zahnfleisch vorgesehen ist.

Der oben beschriebene Kunststoffsattel ist vorteilhaft, da die weitere benachbarte Zahnkrone, welche einstückig mit einer äußeren Zahnkrone verbunden ist, nicht alleine durch ihre Verbindung zu der äußeren Zahnkrone gehalten werden muss. Stattdessen dient der Kunststoffsattel als eine zusätzliche Auflage für die weitere Zahnkrone, sodass darauf wirkende Kräfte über den Kunststoffsattel auf den Kiefer oder das Zahnfleisch übertragen werden können. Insbesondere kann der Kunststoffsattel dazu dienen, eine Unebenheit im Zahnfleisch auszugleichen und dadurch eine gleichmäßige Kraftverteilung zwischen der Zahnkrone und dem Kiefer oder dem Zahnfleisch zu ermöglichen. Die Auflage auf dem Kiefer kann einen Kontakt zwischen dem Kunststoffsattel und dem Zahnfleisch und/oder dem Kieferknochen umfassen. Der Kunststoffsattel kann mit der weiteren Zahnkrone lösbar verbindbar sein.

Es ist besonders vorteilhaft, wenn der Kunststoffsattel aus einem Verblendkunststoff hergestellt ist. Hierbei handelt sich um einen Kunststoff, der üblicherweise auf eine Metall- oder Keramikkrone aufgetragen wird, um die Farbe, Textur und Form der natürlichen Zähne nachzubilden. Typischerweise dient Verblendkunststoff dazu, um die ästhetische Wirkung von Zahnersatz zu verbessern. Untersuchungen haben jedoch auch gezeigt, dass ein aus Verblendkunststoff hergestellter Kunststoffsattel gute mechanische Eigenschaften hat, um Kräfte zwischen der äußeren Zahnkrone sowie der mit ihr einstückig verbundenen, benachbarten Zahnkrone auf den Kiefer oder auf das Zahnfleisch übertragen zu können. Insofern stellt die Verwendung des Verblendkunststoffes zur Ausgestaltung des Kunststoffsattels eine Abkehr von seiner gängigen Verwendung in der Zahnprothetik dar. Insbesondere ist der Kunststoffsattel nicht aus Prothesenkunststoff hergestellt.

In einer denkbaren Ausführungsform kann der Verblendkunststoff auf Basis von Methacryl hergestellt sein und insbesondere Triethylenglycol-dimethacrylat und Diphenyl(2,4,6-trimethylbenzoyl)phosphinoxid und Methacrylsäure und Methyl-methacrylat,enthalten. Ein derartiger Verblendkunststoff ist unter dem Handelsnamen PALA cre-active bekannt.

Alternativ kann der Kunststoffsattel auf Basis von 7,7,9-Trimethyl-4,13-dioxo-3,14-dioxa-5,12-diaza-hexadecan-1,16-diol-dimethacrylat und Triethylenglycoldimethacrylat und Ditrimethylolpropan Tetraacrylat und 2-Dimethylaminoethylmethacrylat hergestellt sein. Eine entsprechende Materialzusammensetzung ist unter dem Handelsnamen VITA VM LC flow bekannt. Untersuchungen haben gezeigt, dass es mittels dieser Stoffzusammensetzung auf einfache Weise möglich ist, fehlende Zahnfleischanteile zu ersetzen.

Alternativ kann der Kunststoffsattel aus Polymethylmethacrylat (PMMA) hergestellt sein. Untersuchungen haben gezeigt, dass ein solcher Kunststoffsattel aus PMMA eine besonders gute Eignung für eine spanende Bearbeitung aufweist und insbesondere mittels Fräsen hergestellt sein kann. Dies ermöglicht die Herstellung der Zahnprothese und deren Bestandteilen unter Nutzung von Schnittstellen des Computer-Aided-Design und Computer-Aided-Manufacturing (CAD-CAM). Hiermit geht ein hohes Maß an Digitalisierung und Automatisierung in der Herstellung einher. Ferner lässt sich mittels Fräsen eine besonders hohe Maßhaltigkeit erreichen.

Vorzugweise ist der Kunststoffsattel mittels eines Haftvermittlers mit der weiteren Zahnkrone verbunden.

Der Haftvermittler kann eine Zusammensetzung mit ethoxyliertes Propylidintrimethanol und Ester und Acrylsäure und Diphenyl(2,4,6-trimethylbenzoyl)phos-phinoxid und 1,4-Butandioldimethacrylat enthalten, welche unter dem Handelsnamen Signum Ceramic Bond I bekannt ist.

Ebenso kann der Haftvermittler eine Zusammensetzung mit Isopropanol und Aceton und Methyl-methacrylat enthalten, die unter dem Handelsnamen Signum Ceramic Bond II bekannt ist. Ferner kann der Haftvermittler eine Zusammensetzung mit ethoxyliertem Propylidintrimethanol, Ester mit Acrylsäure und 1,4-Butandioldimethacrylat und 7,7,9 (oder 7,9,9) Trimethyl-4,13-dioxo-3,14-dioxa-5,12-diaza-hexadecan-1,16-diylbismethacrylat und Diphenyl(2,4,6-trimethylbenzoyl)phosphinoxid und 2-Propensäure, 1,1'-[(1-methyl-1,2-etha-nediyl)bis[oxy(methyl-2,1- I)]]ester und Reaktionsprodukte mit Diethylamin enthalten, welche unter dem Handelsnamen Signum Liquid bekannt sind.

Zusätzlich oder alternativ kann der Haftvermittler eine Zusammensetzung mit Methyl-methacryla und 7,7,9 (oder 7,9,9) Trimethyl-4,13-dioxo-3,14-dioxa5,12-diaza-hexadecan-1,16-diylbismethacrylat und Diphenyl(2,4,6-trimethylbenzoyl)phosphinoxid und tert-Butylperbenzoat enthalten, die unter dem Handelsnamen Signum Connector bekannt ist.

Zusätzlich oder alternativ kann der Haftvermittler eine Zusammensetzung mit Aceton und 10-Methacryl-oxydecyl-dihydrogenphosphat und Essigsäure enthalten, die unter dem Handelsnamen Signum Universal Bond I bekannt ist.

Zusätzlich oder alternativ kann der Haftvermittler eine Zusammensetzung mit Methyl-methacrylat und 7,7,9 (oder 7,9,9) Trimethyl-4,13-dioxo-3,14-dioxa5,12-diaza-hexadecan-1,16-diylbismethacrylat und Diphenyl(2,4,6-trimethylbenzoyl)phosphinoxid und tert-Butylperbenzoat enthalten, die unter dem Handelsnamen Signum Universal Bond II bekannt ist.

Untersuchungen haben ergeben, dass die vorstehend genannten Haftvermittler eine gute Eignung zur Anbindung des Kunststoffsattels an die weitere Zahnkrone aufweisen.

In einer vorteilhaften Weiterbildung ist der Kunststoffsattel und die weitere Zahnkrone in einem gemeinsamen Kontaktbereich ausgebildet, um eine formschlüssige Verbindung herzustellen. Die formschlüssige Verbindung kann im Rahmen der Weiterbildung als eine sog. mechanische Retention ausgebildet sein, mittels derer eine relative Verlagerung zwischen dem Kunststoffsattel und der weiteren Zahnkrone unterbunden ist. Insbesondere wird mittels der formschlüssigen Verbindung eine lineare Verlagerung zwischen dem Kunststoffsattel und der weiteren Zahnkrone entlang und/oder quer zu einer Zahnachse der weiteren Zahnkrone unterbunden, Die Zahnachse kann hierbei eine Erstreckungsachse beschreiben, welche in Bezug auf einen gesunden, einwurzligen Zahn als Verbindungslinie zwischen einer Wurzelspitze und einer Mitte der Schneidekante definiert sein kann. Bei mehrwurzligen Zähnen kann diese Verbindungslinie sich zwischen der Wurzelgabelung und einer Kauflächenmitte erstrecken. Ferner kann die formschlüssige Verbindung auch dazu ausgebildet sein, eine relative Verdrehung zwischen dem Kunststoffsattel und der weiteren Zahnkrone um die Zahnachse der weiteren Zahnkrone zu unterbinden.

Wird die Zahnprothese im Mundraum aufgenommen, so dass die äußere Zahnkrone auf die innere Zahnkrone aufgesteckt ist, wird die formschlüssige Verbindung zwischen dem Kunststoffsattel und der zu der äußeren Zahnkrone benachbarten, weiteren Zahnkrone geschlossen. Dies trägt zum sicheren Sitz der Zahnprothese bei. Die formschlüssige Verbindung kann insbesondere als eine Feder-Nut-Verbindung zwischen dem Kunststoffsattel und der weiteren Zahnkrone angesehen werden. Insbesondere kann der Kunststoffsattel, der für die Ausbildung einer formschlüssigen Verbindung dient, mittels Fräsen hergestellt sein, insbesondere wenn der Kunststoffsattel aus PMMA hergestellt ist, wodurch sich eine besonders hohe Maßhaltigkeit erreichen lässt. Ferner lassen sich die weitere Zahnkrone und der Kunststoffsattel mit einer höheren Genauigkeit relativ zueinander positionieren.

In einer einfachen Ausführungsform kann der Kunststoffsattel auf einer der weiteren Zahnkrone zugewandten Oberfläche eine oder mehrere Erhebungen aufweisen und die weitere Zahnkrone eine oder mehrere dazu korrespondierende Ausnehmungen oder umgekehrt. Eine solche Erhebung kann ein Wulst sein. Eine Ausnehmung kann eine Rille sein.

In einer vorteilhaften Weiterbildung ist die äußere Zahnkrone von einem Kunststoffgerüst gehalten, wobei das Kunststoffgerüst die äußere Zahnkrone zumindest teilweise auskleidet.

Obwohl grundsätzlich kein Gerüst oder zusätzliche Halteelemente erforderlich sind, um die innere und die äußere Zahnkrone in einer Teleskopanordnung anbringen zu können, lassen sich durch den Einsatz eines Kunststoffgerüsts die Stabilität der äußeren Zahnkrone sowie etwaig damit verbundener weiterer Zahnkronen verbessern. Insbesondere ergeben sich Vorteile, wenn das Kunststoffgerüst aus Polyetheretherketon (PEEK) hergestellt ist.

PEEK ist ein thermoplastischer Kunststoff, der hinsichtlich seiner Festigkeit, Haltbarkeit und Biokompatibilität eine gute Eignung für den Einsatz in der Zahnprothese aufweist. Insbesondere kann das aus PEEK hergestellt Kunststoffgerüst mittels Fräsen an die Geometrie der äußeren Zahnkrone angepasst und stoffschlüssig mit dieser verbunden werden. Insbesondere kann die äußere Zahnkrone dadurch einen Hohlraum aufweisen, welcher teilweise oder vollständig mit PEEK ausgekleidet ist. In der Teleskopanordnung kann das Kunststoffgerüst zumindest bereichsweise zwischen der inneren und der äußeren Zahnkrone angeordnet sein.

In einer vorteilhaften Weiterbildung umfasst die Zahnprothese eine Friktionsvorrichtung, welche dafür vorgesehen ist, um zwischen der inneren und der äußeren Zahnkrone angeordnet zu werden, um eine Reibung für die Presspassung einzustellen.

Untersuchungen haben gezeigt, dass das Coulomb'sche Reibungsmodell geeignet ist, um die in der Presspassung wirkenden Kraftverhältnisse zu charakterisieren. Demnach ist die erreichbare Haltekraft zwischen innerer und äußerer Zahnkrone abhängig von einem Reibungskoeffizienten und einer Kraft, die senkrecht zu den Wirkflächen der Presspassung zwischen der inneren und der äußeren Zahnkrone orientiert ist. In einer einfachen Ausführungsform kann die Friktionsvorrichtung ein einzelnes Element umfassen, dessen Materialbeschaffenheit und/oder Oberflächenbeschaffenheit in Abhängigkeit eines zu erreichenden Reibungskoeffizienten ausgewählt sein kann. Zudem ist es denkbar, dass das Element eine Geometrie aufweist, die beim Fügen der inneren und der äußeren Zahnkrone eine erhöhte Presskraft in einem gemeinsamen Kontaktbereich zwischen Ihnen bewirkt. Dies lässt sich zum Beispiel durch eine Keilgeometrie erreichen. Insbesondere ist es mittels der Friktionsvorrichtung möglich, unerwünschte oder unvermeidbare Abweichungen gegenüber einer Soll-Geometrie in der Herstellung der inneren und/oder äußeren Zahnkrone zu kompensieren.

In einer vorteilhaften Weiterbildung umfasst die Friktionsvorrichtung eine elastische Führung und eine Schraube, wobei die Führung und die Schraube derart zusammenwirkend ausgebildet sind, dass eine radiale Abmessung der Führung von einer Einschraubtiefe der Schraube in der Führung abhängig ist.

Die vorstehend beschriebene Weiterbildung ermöglicht es, die Reibung zum einen über die Oberflächenbeschaffenheit der Führung und zum anderen über die Veränderung der radialen Abmessung in Abhängigkeit der Einschraubtiefe einzustellen. Eine vergrößerte radiale Abmessung führt beim Fügen der äußeren und der inneren Zahnkrone zu einer vergrößerten Haltekraft und eine verringerte radiale Abmessung zu einer entsprechend verringerten Haltekraft.

In einer anderen vorteilhaften Weiterbildung kann die Friktionsvorrichtung eine Friktionsmatrize sein, die an der äußeren Zahnkrone, insbesondere in dem Hohlraum der äußeren Zahnkrone, befestigt werden kann.

Die Friktionsmatrize kann als ein nicht verstellbares Element angesehen werden, dessen Geometrie und/oder Oberflächenbeschaffenheit und/oder Materialbeschaffenheit gewählt sein können, um die Haltekraft beziehungsweise den Reibungskoeffizienten einzustellen. Insbesondere kann eine derartige Friktionsmatrize in dem Hohlraum der äußeren Zahnkrone positioniert werden.

Wie oben erwähnt, wird die Aufgabe auch gelöst durch ein Verfahren gemäß Anspruch 13. Erfindungsgemäß dient das Verfahren zur Herstellung einer erfindungsgemäßen Zahnprothese oder einer ihrer vorteilhaften Weiterbildungen. Hierbei wird die innere Zahnkrone aus Keramik gefräst. Zudem wird die äußere Zahnkrone und vorzugsweise mindestens eine, vorzugsweise zwei, höchst vorzugsweise drei, insbesondere bevorzugt mehr als drei weitere, benachbarte Zahnkronen einstückig aus Keramik gefräst.

Insbesondere erfolgt das Fräsen der inneren und/oder der äußeren Zahnkrone in Abhängigkeit eines zuvor erstellten Modells, dessen Geometrie und Abmessungen, denen der herzustellenden inneren und/oder äußeren Zahnkrone entsprechen.

Bevorzugt erfolgt im Anschluss an das Fräsen ein Sintern der inneren und/oder der äußeren Zahnkrone. Hierbei wird die gefräste Rohkeramik unter Wärmeeinwirkung verdichtet und verfestigt, wodurch sie eine höhere Stabilität erlangt, um den auftretenden Belastungen im Mundbereich, etwa beim Kauen von Speisen, besser standhalten zu können.

Zweckmäßigerweise können die innere Zahnkrone und/oder die äußere Zahnkrone geschliffen werden, um eine Abmessung und/oder eine Geometrie einzustellen, mit der sich in einer Teleskopanordnung eine Presspassung ausbilden lässt.

Insbesondere kann das Verfahren einen Glanzbrand umfassen. Hierbei handelt es sich um einen Brennvorgang, bei dem insbesondere die äußere Zahnkrone veredelt wird und dabei vorzugsweise eine natürliche Transluzenz erhält, die der von natürlichen Zähnen ähnelt. Ferner erhöht sich infolge des Glanzbrandes die Widerstandsfähigkeit der Keramik gegenüber Abrieb, Korrosion und Verfärbung. Darüber hinaus kann die äußere Zahnkrone sowie zumindest eine weitere, benachbarte Zahnkrone im Rahmen des Verfahrens mit einem Kunststoffgerüst aus PEEK versehen werden.

In einer vorteilhaften Weiterbildung wird ein Kunststoffsattel aus einem Verblendkunststoff hergestellt. Alternativ wird der Kunststoffsattel aus PMMA gefräst und vorzugsweise mit der zumindest einen weiteren Zahnkrone formschlüssig verbunden. Der Kunststoffsattel dient als Auflage für die weiteren Zahnkrone auf einem Kiefer und/oder Zahnfleisch. Im Fall eines aus PMMA gefrästen Kunststoffsattels kann dieser vor dem Fräsen als ein Rohling vorliegen, dessen Geometrie bedarfsgerecht an die Konturen im Mundraum angepasst werden kann, bevorzugt unter Ausnutzung von Schnittstellen des Computer-Aided-Design und Computer-Aided-Manufacturing (CAD-CAM). Vorzugsweise umfasst die formschlüssige Verbindung zwischen dem Kunststoffsattel und der weiteren Zahnkrone eine Feder-Nut-Verbindung in dem gemeinsamen Kontaktbereich.

Es liegt im Rahmen der Erfindung, dass die erfindungsgemäße Zahnprothese oder eine vorteilhafte Weiterbildung davon mittels des erfindungsgemäßen Verfahrens oder einer vorteilhaften Weiterbildung davon hergestellt werden kann. Im Zusammenhang mit den Vorteilen, die mittels des Verfahrens erreichbar sind, gelten die Ausführungen in Bezug auf die Zahnprothese daher entsprechend.

Wichtige Vorteile der Erfindung sowie ihrer vorteilhaften Weiterbildungen sind nachfolgend anhand von Ausführungsbeispielen und den Figuren erläutert.

Es zeigen
- Figur 1: eine erste Zahnprothese in drei möglichen Ausführungsformen gemäß den Ansichten a), b), c);
- Figur 2: eine zweite Zahnprothese;
- Figur 3: eine dritte Zahnprothese;
- Figur 4: eine vierte Zahnprothese.

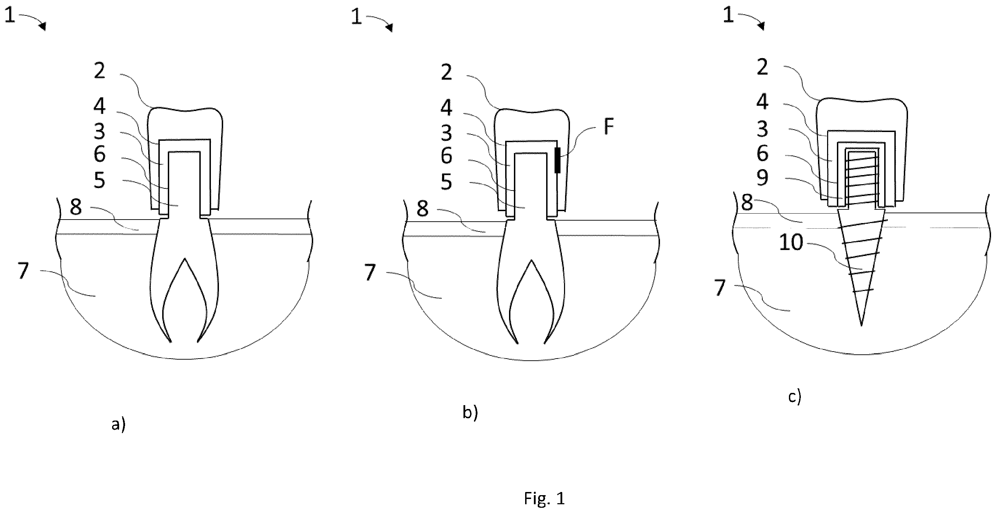

Figur 1 zeigt in den Ansichten a), b) und c) jeweils eine Zahnprothese 1, die im menschlichen Mund getragen werden kann und dazu dient, einen einzelnen, teilweise fehlenden Zahn zu ersetzen.

Gemäß der in Ansicht a) der Figur 1 gezeigten Ausführungsform umfasst die Zahnprothese 1 eine Teleskopanordnung, bei der eine äußere Zahnkrone 2 auf eine innere Zahnkrone 3 gesteckt ist und in dem gemeinsamen Kontaktbereich 4 eine lösbare Verbindung nach der Art einer Presspassung ausbildet. Die innere Zahnkrone 3 ist wiederum von einem Zahnstumpf 5 gehalten und in einem gemeinsamen Kontaktbereich 6 mit diesem stoffschlüssig verbunden. Hierfür weist der Zahnstumpf 5 oberhalb des Kieferknochens 7 und des Zahlfleisches 8 einen im Wesentlichen zylindrisch geschliffenen Bereich auf.

Ansicht b) der Figur 1 zeigt eine alternative Ausführungsform, die in weiten Teilen der in Ansicht a) gezeigten Ausführungsform entspricht. Die Zahnprothese 1 ist ebenfalls in einer Teleskopanordnung mit der äußeren Zahnkrone 2 und der inneren Zahnkrone 3 ausgeführt, wobei die innere Zahnkrone 3 auf einen Zahnstumpf 5 gesteckt ist und die äußere Zahnkrone 2 auf die inneren Zahnkrone 3 gesteckt ist. Darüber hinaus sind die äußere und die innere Zahnkrone 2 bzw. 3 in dem gemeinsamen Kontaktbereich mittels einer Presspassung miteinander gefügt.

Im Unterschied zu der in Ansicht a) gezeigten Ausführungsform ist gemäß Ansicht b) der Figur 1 zwischen der äußeren Zahnkrone 2 und der inneren Zahnkrone 3 eine Friktionsvorrichtung F angeordnet. Diese dient dazu, eine Reibung für die Presspassung einzustellen. In nicht näher gezeigter Weise, umfasst die Friktionsvorrichtung F eine elastische Führung und eine Schraube, welche derart zusammenwirkend ausgebildet sind, dass eine radiale Abmessung der elastischen Führung von einer Einschraubtiefe der Schraube abhängig ist. Durch Verstellung der Einschraubtiefe kann die radiale Abmessung bedarfsweise und vor dem Fügen der äußeren und der inneren Zahnkrone 2 bzw. 3 eingestellt werden und dadurch die Haltekraft für die Presspassung bedarfsweise beeinflusst werden. Die Friktionsvorrichtung F kann an der äußeren Zahnkrone 2 befestigt sein. Alternativ kann die Friktionsvorrichtung F als nicht verstellbare Friktionsmatrize ausgebildet sein, deren Geometrie und Abmessungen sowie Materialwahl und Oberflächenbeschaffenheit ausgewählt werden können, um die gewünschte Reibung zu erzeugen.

Gemäß der in Ansicht c) der Figur 1 gezeigten Ausführungsform ist die Zahnprothese 1 ebenfalls in einer Teleskopanordnung ausgeführt, bei der eine äußere Zahnkrone 2 auf eine innere Zahnkrone 3 gesteckt ist und in dem gemeinsamen Kontaktbereich 4 eine lösbare Verbindung nach der Art einer Presspassung ausbildet. Im Unterschied zu der in Ansichten a) und b) gezeigten Ausführungsformen ist die innere Zahnkrone 3 jedoch nicht von einem natürlichen Zahnstumpf, sondern von einem Implantataufbau (auch: Abutment) 9 aufgenommen, der oberhalb des Kieferknochens 7 und des Zahnfleisches 8 mit einem Implantat 10 verschraubt ist. Die innere Zahnkrone 3 ist in dem gemeinsamen Kontaktbereich 6 mit dem Implantataufbau 9 verklebt. Es liegt im Rahmen der in Ansicht c) der Figur 1 gezeigten Ausführungsform, dass eine Friktionsvorrichtung F zwischen der äußeren Zahnkrone 2 und der inneren Zahnkrone 3 angeordnet werden kann.

Ein Vorteil, der mit der in Ansichten a), b) und c) der Figur 1 gezeigten Ausführungsformen einhergeht, besteht darin, dass sowohl die äußeren Zahnkronen 2 als auch die inneren Zahnkronen 3 jeweils vollständig aus Keramik hergestellt sind. Vorliegend handelt es sich bei den verwendeten Keramiken jeweils um Zirkon.

Die Verwendung von Zirkon für die Ausgestaltung der äußeren Zahnkrone 2 und der inneren Zahnkrone 3 ist vorteilhaft, da Zirkon eine geringe Wärmeausdehnung aufweist. Dies führt dazu, dass zwischen der äußeren Zahnkrone 2 und der inneren Zahnkrone 3 im Falle eines Wärmeeintrages eine gleichmäßige Wärmeausdehnung erfolgt, die die Presspassung nicht beeinträchtigt. Dadurch ist die Presspassung zwischen der äußeren Zahnkrone 2 und der inneren Zahnkrone 3 zuverlässiger und belastbarer im Vergleich zu herkömmlichen Zahnprothesen.

Durch die Ausbildung der Presspassung zwischen äußerer Zahnkrone 2 und innerer Zahnkrone 3 kann grundsätzlich auf zusätzliche haltende Elemente verzichtet werden, wodurch die Zahnprothese 1 insgesamt einen einfachen Aufbau aufweisen kann. Insbesondere ist kein Gerüst erforderlich, das die äußere Zahnkrone 2 im Mundraum hält. Diesem Vorteil steht der Einsatz der Friktionsvorrichtung F gemäß Ansicht b) der Figur 1 nicht entgegen, insbesondere wenn die besagte Friktionsvorrichtung F an der äußeren Zahnkrone 2 befestigt werden kann.

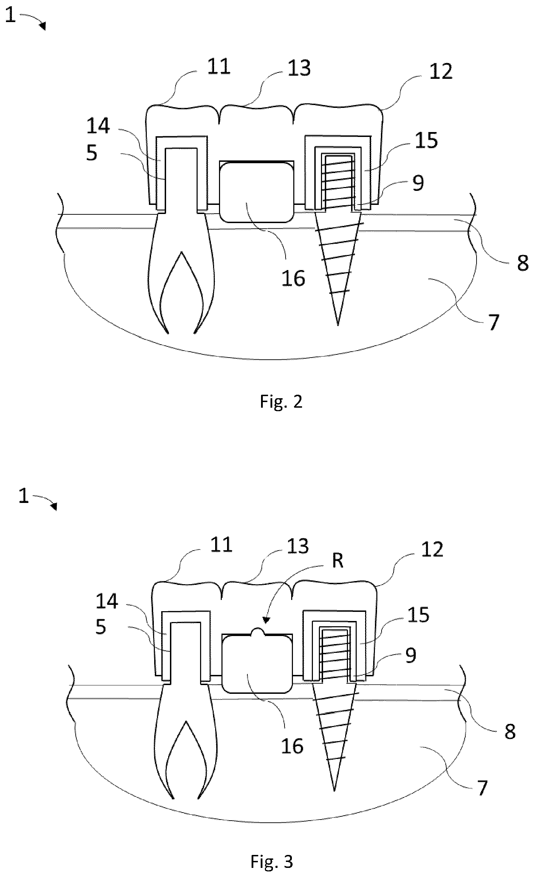

Ein weiterer Vorteil in der Verwendung von Keramik zur Herstellung der äußeren Zahnkrone 2 ist, dass nicht lediglich ein, sondern gleich mehrere Zahnkronen einstückig mittels Fräsen herstellbar sind. Damit lassen sich beispielsweise Reihen zusammenhängender Zahnkronen herstellen, wie sie beispielhaft in den Figuren 2 und 3 gezeigt sind.

Figur 2 zeigt eine zweite Zahnprothese 1 mit einer ersten äußeren Zahnkrone 11, einer zweiten äußeren Zahnkrone 12 sowie einer dazwischen angeordneten, weiteren Zahnkrone 13. Die erste äußere Zahnkrone 11 ist mittels einer Presspassung lösbar mit einer ersten inneren Zahnkrone 14 verbunden. Die zweite äußere Zahnkrone 12 ist ebenfalls mittels einer Presspassung lösbar mit einer zweiten inneren Zahnkrone 15 verbunden. Entsprechend den Ausführungen in Zusammenhang mit Ansicht a) der Figur 1 ist die erste innere Zahnkrone 14 an einem Zahnstumpf 5 angeordnet, während die zweite innere Zahnkrone 15 entsprechend den Ausführungen in Zusammenhang mit Ansicht b) der Figur 1 mit einem Implantataufbau 9 verbunden ist.

Im Unterschied zu den in Figur 1 gezeigten Ausführungsformen sind die erste äußere Zahnkrone 11 sowie die zweite äußere Zahnkrone 12 jeweils mit der dazwischenliegenden, benachbarten Zahnkrone 13 verbunden, sodass sich eine einstückige Zahnreihe mit den Zahnkronen 11, 12, 13 ergibt. Die Zahnkrone 13 unterscheidet sich dadurch von den randseitig angeordneten Zahnkronen 11 und 12, dass diese nicht nach der Art einer Teleskopanordnung auf eine innere Zahnkrone aufgesteckt ist, sondern auf einem Kunststoffsattel 16 aufliegt.

Der Kunststoffsattel ist aus einem Verblendkunststoff hergestellt und dient als Auflage für die Zahnkrone 13 auf dem Zahnfleisch 8 und damit mittelbar auf dem Kieferknochen 7. Ein Vorteil des Kunststoffsattels 16 besteht darin, dass dieser grundsätzlich mit einer beliebigen Gestalt und beliebigen Abmessungen herstellbar ist und deshalb dafür geeignet ist, Unebenheiten im Zahnfleisch auszugleichen. Dadurch ist mittels des Kunststoffsattels 16 eine nahezu spielfreie Kraftübertragung zwischen der Zahnkrone 13 und dem Kiefer möglich. Es ist ferner vorteilhaft, dass für die Ausgestaltung des Kunststoffsattels 16 kein Prothesenkunststoff verwendet werden muss, sondern auf Verblendkunststoff zurückgegriffen werden kann.

Wie anhand von Figur 2 ebenfalls ersichtlich ist, kann durch die hier gezeigte, zusammenhängende Ausgestaltung der Zahnkronen 11, 12 und 13 eine Zahnprothese bereitgestellt werden, die auch die Funktionen einer Brücke erfüllt. Im Unterschied zu vorbekannten Brücken ermöglicht es die Presspassung zwischen den randseitig angeordneten Zahnkronen 11 und 12 sowie den dazu gehörigen inneren Zahnkronen 14 beziehungsweise 15 die aus den Zahnkronen 11, 12 und 13 gebildete künstliche Zahnreihe bedarfsweise zu entnehmen und wieder einzusetzen.

Figur 3 zeigt eine dritte Zahnprothese 1, welche im Wesentlichen die gleichen technischen Merkmale aufweist, wie die in Figur 2 gezeigte Zahnprothese 1. Insofern gelten für identische Merkmale die Ausführungen in Bezug auf Figur 2 entsprechend. Ein Unterschied gegenüber der in Figur 2 gezeigten Zahnprothese 1 besteht allerdings darin, dass der Kunststoffsattel 16 und die weitere Zahnkrone 13 in einem gemeinsamen Kontaktbereich formschlüssig miteinander verbunden sind. Hierfür sind die weitere Zahnkrone 13 und der Kunststoffsattel an ihren Oberflächen derart konturiert, dass sie eine Feder-Nut-Verbindung R ausbilden. Die Feder-Nut-Verbindung R weist auf Seiten des Kunststoffsattels 16 einen Wulst auf, der sich gemäß Figur 3 in die Bildebene erstreckt, und die weitere Zahnkrone 13 eine dazu korrespondierende Rille. In einer alternativen Ausführungsform können die Zahnkrone 13 und der Kunststoffsattel 16 mehrere Feder-Nut-Verbindungen aufweisen. Ferner kann es zweckdienlich sein, den Wulst auf Seiten der Zahnkrone 13 und die Rille auf Seiten des Kunststoffsattels 16 auszubilden. Die formschlüssige Verbindung ermöglicht eine bessere Positionierbarkeit der weiteren Zahnkrone 13 gegenüber dem Kunststoffsattel 16. Der Kunststoffsattel 16 gemäß Figur 3 ist aus Polymethylmethacrylat (PMMA) gefräst. Ein Haftvermittler dient dazu, den Kunststoffsattel 16 und die weitere Zahnkrone 13 stoffschlüssig miteinander zu verbinden.

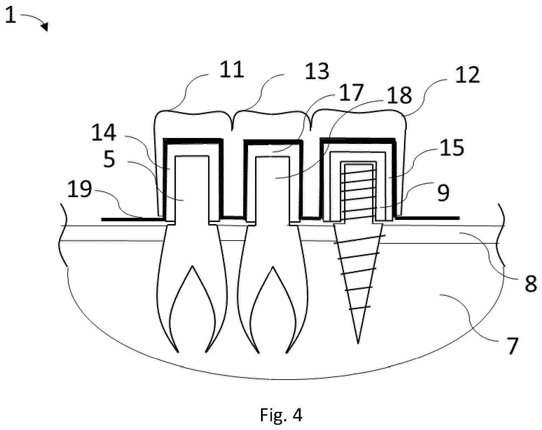

Figur 4 zeigt eine vierte Zahnprothese 1, welche entsprechend den Ausführungen zu Figur 2 eine erste äußere Zahnkrone 11, eine zweite äußere Zahnkrone 12 und eine dazwischenliegende dritte Zahnkrone aufweist 13. Ferner steckt die erste äußere Zahnkrone 11 auf einer ersten inneren Zahnkrone 14 und die zweite äußere Zahnkrone 12 auf einer zweiten inneren Zahnkrone 15. Im Unterschied zu den Ausführungen in Zusammenhang mit Figur 2 ist die dritte Zahnkrone 13 als äußere Zahnkrone einer Teleskopanordnung ausgebildet und steckt auf einer dritten inneren Zahnkrone 17, die wiederum von einem natürlichen Zahnstumpf 18 gehalten ist.

Im Unterschied zu den in den Figuren 2 und 3 gezeigten Ausführungsbeispielen weist die in Figur 4 gezeigte künstliche Zahnreihe mit den Zahnkronen 11, 12 und 13 ein Kunststoffgerüst 19 auf, welches aus gefrästem PEEK hergestellt ist. Im Vergleich zu einer Ausführungsform, bei der kein Kunststoffgerüst vorhanden ist, weist die in Figur 4 gezeigte Ausführungsform der Zahnprothese 1 eine erhöhte Stabilität auf. In nicht näher gezeigter Weise können auch die in den Figu-ren 1, 2 und 3 gezeigten Zahnprothesen mit einem Kunststoffgerüst versehen sein.

Es liegt im Rahmen der in Figur 2, 3 und 4 gezeigten Ausführungsformen, dass bedarfsweise eine Friktionsvorrichtung F zum Einsatz kommen kann, um die Reibung in dem gemeinsamen Kontaktbereich zwischen einer der äußeren Zahnkronen und der korrespondierenden inneren Zahnkrone bedarfsgerecht beeinflussen zu können. Insbesondere ist dies auch in Kombination mit einem Kunststoffsattel denkbar, welcher auch dazu ausgebildet sein kann, eine formschlüssige Verbindung zu einer weiteren Zahnkrone zu bilden.

## Patentansprüche

1. Zahnprothese (1) mit zumindest einer inneren Zahnkrone (3, 14, 15, 17) und zumindest einer äußeren Zahnkrone (2, 11, 12, 13),
bei der die innere Zahnkrone (3, 14, 15, 17) und die äußere Zahnkrone (2, 11, 12, 13) dafür vorgesehen sind, um in einer Teleskopanordnung an einem Zahnstumpf (5) oder einem Zahnimplantataufbau (9) angeordnet zu werden,
wobei in der Teleskopanordnung die innere Zahnkrone (3, 14, 15, 17) auf den Zahnstumpf (5) oder den Zahnimplantataufbau (9) gesteckt ist und die äußere Zahnkrone (2, 11, 12, 13) auf die innere Zahnkrone (3, 14, 15, 17) gesteckt ist, wobei
die innere Zahnkrone (3, 14, 15, 17) und die äußere Zahnkrone (2, 11, 12, 13) ausgebildet sind, um in der Teleskopanordnung eine lösbare Verbindung nach der Art einer Presspassung auszubilden
und die äußere Zahnkrone (2, 11, 12, 13) vollständig aus Keramik hergestellt ist
und die innere Zahnkrone (3, 14, 15, 17) vollständig aus Keramik hergestellt ist und wobei
die äußere Zahnkrone zusammen mit zumindest zwei weiteren benachbarten äußeren Zahnkronen einstückig und aus Keramik hergestellt ist, wobei die Zahnprothese zumindest teilweise als eine herausnehmbare Brücke ausgebildet ist,
und mit einem Kunststoffsattel, wobei zumindest eine der weiteren Zahnkronen (13) mit dem Kunststoffsattel (16) verbunden ist und der Kunststoffsattel als Auflage für zumindest eine der weiteren Zahnkronen (13) auf einem Kiefer und/oder Zahnfleisch vorgesehen ist.

2. Zahnprothese (1) nach Anspruch 1,
bei der die äußere Zahnkrone (2, 11, 12, 13) einen zylindrischen Hohlraum aufweist und die innere Zahnkrone (3, 14, 15, 17) eine zylindrische Außenwandung aufweist.

3. Zahnprothese (1) nach einem der voranstehenden Ansprüche,
bei der die innere Zahnkrone (3, 14, 15, 17) eine Aushöhlung aufweist, die dafür vorgesehen ist, um den Zahnstumpf (5) oder den Zahnimplantataufbau (9) aufzunehmen und stoffschlüssig, insbesondere mittels Klebung, mit diesem verbunden zu werden.

4. Zahnprothese (1) nach einem der voranstehenden Ansprüche,
bei der die äußere Zahnkrone (2, 11, 12, 13) und/oder die innere Zahnkrone (3, 14, 15, 17) jeweils vollständig aus Zirkon herstellt sind.

5. Zahnprothese (1) nach einem der voranstehenden Ansprüche,
bei der die äußere Zahnkrone (2, 11, 12, 13) zusammen vier, vorzugsweise fünf, höchst vorzugsweise mehr als fünf weiteren, benachbarten Zahnkronen einstückig und aus Keramik gefräst ist.

6. Zahnprothese (1) nach Anspruch 1,
bei der der Kunststoffsattel (16) aus einem Verblendkunststoff hergestellt oder aus Polymethylmethacrylat (PMMA) gefräst ist,
und wobei der Kunststoffsattel (16) insbesondere mittels eines Haftvermittlers mit der weiteren Zahnkrone (13) verbunden ist.

7. Zahnprothese (1) nach einem der voranstehenden Ansprüche,
bei der die äußere Zahnkrone (2, 11, 12, 13) von einem Kunststoffgerüst (19) gehalten ist, wobei das Kunststoffgerüst (19) die äußere Zahnkrone (2, 11, 12, 13) zumindest teilweise auskleidet.

8. Zahnprothese (1) nach Anspruch 7,
bei der das Kunststoffgerüst (19) aus Polyetheretherketon (PEEK) hergestellt ist.

9. Zahnprothese (1) nach einem der voranstehenden Ansprüche, mit einer
Friktionsvorrichtung (F), welche dafür vorgesehen ist, um zwischen der inneren Zahnkrone (3, 14, 15, 17) und der äußeren Zahnkrone (2, 11, 12, 13) angeordnet zu werden, um eine Reibung für die Presspassung einzustellen.

10. Zahnprothese (1) nach Anspruch 9, bei der
die Friktionsvorrichtung (F) eine elastische Führung und eine Schraube umfasst und die Führung und die Schraube derart zusammenwirkend ausgebildet sind, dass eine radiale Abmessung der Führung von einer Einschraubtiefe der Schraube in der Führung abhängig ist.

11. Zahnprothese (1) nach Anspruch 9, bei der
die Friktionsvorrichtung (F) eine Friktionsmatrize ist, die an der äußeren Zahnkrone, insbesondere in dem Hohlraum der äußeren Zahnkrone, befestigt ist.

12. Verfahren zur Herstellung einer Zahnprothese (1) nach einem der Ansprüche 1 bis 11,
bei dem die innere Zahnkrone (3, 14, 15, 17) aus Keramik gefräst wird und
bei dem die äußere Zahnkrone (2, 11, 12, 13) zusammen mit mindestens zwei weiteren benachbarten Zahnkronen und aus Keramik gefräst wird, wobei die Zahnprothese zumindest teilweise als eine herausnehmbare Brücke ausgebildet wird,
und ein Kunststoffsattel (16) als Auflage für die weitere Zahnkrone (13) auf einem Kiefer und/oder Zahnfleisch dient, wobei zumindest eine der weiteren Zahnkronen (13) mit dem Kunststoffsattel (16) verbunden wird.

13. Verfahren nach Anspruch 12, bei dem
die äußere Zahnkrone (2, 11, 12) zusammen mit mindestens drei, insbesondere bevorzugt mehr als drei weiteren, benachbarten Zahnkronen (13) einstückig gefräst wird.

14. Verfahren nach Anspruch 13, bei dem
der Kunststoffsattel (16)aus einem Verblendkunststoff, insbesondere auf Basis von Polymethylmethacrylat (PMMA) gefräst wird und mit der zumindest einen weiteren Zahnkrone (3) formschlüssig verbunden wird, insbesondere mittels einer Feder-Nut-Verbindung (R) in einem gemeinsamen Kontaktbereich.

## Claims

1. Dental prosthesis (1) having at least one inner tooth crown (3, 14, 15, 17) and at least one outer tooth crown (2, 11, 12, 13),
in which the inner tooth crown (3, 14, 15, 17) and the outer tooth crown (2, 11, 12, 13) are provided in order to be arranged on a tooth stump (5) or a tooth implant structure (9) in a telescopic arrangement,
wherein in the telescopic arrangement the inner tooth crown (3, 14, 15, 17) is placed on the tooth stump (5) or the tooth implant structure (9) and the outer tooth crown (2, 11, 12, 13) is placed on the inner tooth crown (3, 14, 15, 17), wherein
the inner tooth crown (3, 14, 15, 17) and the outer tooth crown (2, 11, 12, 13) are constructed to form a releasable connection in the manner of a press-fit in the telescopic arrangement
and the outer tooth crown (2, 11, 12, 13) is produced completely from ceramic material
and the inner tooth crown (3, 14, 15, 17) is produced completely from ceramic material and wherein
the outer tooth crown is produced integrally with at least two other adjacent outer tooth crowns and from ceramic material, wherein the dental prosthesis is at least partially in the form of a removable bridge,
and having a plastics material saddle, wherein at least one of the additional tooth crowns (13) is connected to the plastics material saddle (16) and the plastics material saddle is provided as a support for at least one of the additional tooth crowns (13) on a jaw and/or gum.

2. Dental prosthesis (1) according to claim 1,
in which the outer tooth crown (2, 11, 12, 13) has a cylindrical hollow space and the inner tooth crown (3, 14, 15, 17) has a cylindrical outer wall.

3. Dental prosthesis (1) according to any one of the preceding claims,
in which the inner tooth crown (3, 14, 15, 17) has a cavity which is provided to receive the tooth stump (5) or the tooth implant structure (9) and to be connected thereto in a materially engaging manner, in particular by means of adhesive bonding.

4. Dental prosthesis (1) according to any one of the preceding claims,
in which the outer tooth crown (2, 11, 12, 13) and/or the inner tooth crown (3, 14, 15, 17) are in each case produced completely from zirconium.

5. Dental prosthesis (1) according to any one of the preceding claims,
in which the outer tooth crown (2, 11, 12, 13) is milled integrally with four, preferably five, extremely preferably more than five additional adjacent tooth crowns and from ceramic material.

6. Dental prosthesis (1) according to claim 1,
in which the plastics material saddle (16) is produced from a veneering plastics material or is milled from polymethyl methacrylate (PMMA),
and wherein the plastics material saddle (16) is connected in particular by means of a bonding agent to the additional tooth crown (13).

7. Dental prosthesis (1) according to any one of the preceding claims,
in which the outer tooth crown (2, 11, 12, 13) is retained by a plastics material frame (19), wherein the plastics material frame (19) at least partially lines the outer tooth crown (2, 11, 12, 13).

8. Dental prosthesis (1) according to claim 7,
in which the plastics material frame (19) is produced from polyetheretherketone (PEEK).

9. Dental prosthesis (1) according to any one of the preceding claims, having a friction device (F) which is provided to be arranged between the inner tooth crown (3, 14, 15, 17) and the outer tooth crown (2, 11, 12, 13) in order to adjust a friction for the press-fit.

10. Dental prosthesis (1) according to claim 9, in which
the friction device (F) comprises a resilient guide and a screw and the guide and the screw are constructed to cooperate with each other in such a manner that a radial dimension of the guide is dependent on a screwing-in depth of the screw in the guide.

11. Dental prosthesis (1) according to claim 9, in which
the friction device (F) is a friction matrix which is secured to the outer tooth crown, in particular in the hollow space of the outer tooth crown.

12. Method for producing a dental prosthesis (1) according to any one of claims 1 to 11,
in which the inner tooth crown (3, 14, 15, 17) is milled from ceramic material and
in which the outer tooth crown (2, 11, 12, 13) is milled together with at least two additional adjacent tooth crowns and from ceramic material, wherein the dental prosthesis is at least partially in the form of a removable bridge,
and a plastics material saddle (16) acts as a support for the additional tooth crown (13) on a jaw and/or gum, wherein at least one of the additional tooth crowns (13) is connected to the plastics material saddle (16).

13. Method according to claim 12, in which
the outer tooth crown (2, 11, 12) is milled integrally with at least three, in particular preferably more than three additional adjacent tooth crowns (13).

14. Method according to claim 13, in which
the plastics material saddle (16) is milled from a veneering plastics material, in particular based on polymethyl methacrylate (PMMA) and is connected in a positive-locking manner to the at least one additional tooth crown (3), in particular by means of a tongue and groove connection (R) in a common contact region.

## Revendications

1. Prothèse dentaire (1) avec au moins une couronne dentaire interne (3, 14, 15, 17) et au moins une couronne dentaire externe (2, 11, 12, 13),
pour laquelle la couronne dentaire interne (3, 14, 15, 17) et la couronne dentaire externe (2, 11, 12, 13) sont prévues afin d'être agencées dans un ensemble télescopique au niveau d'un moignon dentaire (5) ou d'une structure d'implant dentaire (9),
dans laquelle dans l'ensemble télescopique, la couronne dentaire interne (3, 14, 15, 17) est enfichée sur le moignon dentaire (5) ou la structure d'implant dentaire (9) et la couronne dentaire externe (2, 11, 12, 13) est enfichée sur la couronne dentaire interne (3, 14, 15, 17), dans laquelle
la couronne dentaire interne (3, 14, 15, 17) et la couronne dentaire externe (2, 11, 12, 13) sont configurées afin de configurer dans l'ensemble télescopique une liaison amovible à la manière d'un ajustement serré
et la couronne dentaire externe (2, 11, 12, 13) est entièrement fabriquée en céramique
et la couronne dentaire interne (3, 14, 15, 17) est entièrement fabriquée en céramique et dans laquelle
la couronne dentaire externe est fabriquée d'un seul tenant et en céramique conjointement avec au moins deux autres couronnes dentaires externes contigües, dans laquelle la prothèse dentaire est configurée au moins partiellement comme un bridge amovible,
et avec une selle en matière plastique, dans laquelle au moins l'une des autres couronnes dentaires (13) est reliée à la selle en matière plastique (16) et la selle en matière plastique est prévue comme appui pour au moins l'une des autres couronnes dentaires (13) sur une mâchoire et/ou gencive.

2. Prothèse dentaire (1) selon la revendication 1,
pour laquelle la couronne dentaire externe (2, 11, 12, 13) présente une cavité cylindrique et la couronne dentaire interne (3, 14, 15, 17) présente une paroi extérieure cylindrique.

3. Prothèse dentaire (1) selon l'une quelconque des revendications précédentes,
pour laquelle la couronne dentaire interne (3, 14, 15, 17) présente une cavité qui est prévue afin de recevoir le moignon de dent (5) ou la structure d'implant dentaire (9) et d'être reliée à celle-ci par accouplement de matière, en particulier par collage.

4. Prothèse dentaire (1) selon l'une quelconque des revendications précédentes,
pour laquelle la couronne dentaire externe (2, 11, 12, 13) et/ou la couronne dentaire interne (3, 14, 15, 17) sont fabriquées respectivement entièrement en zirconium.

5. Prothèse dentaire (1) selon l'une quelconque des revendications précédentes,
pour laquelle la couronne dentaire externe (2, 11, 12, 13) est fraisée conjointement avec quatre, de préférence cinq, au plus de préférence plus de cinq autres couronnes dentaires contigües d'un seul tenant et en céramique.

6. Prothèse dentaire (1) selon la revendication 1,
pour laquelle la selle en matière plastique (16) est fabriquée en une matière plastique de revêtement ou fraisée en polyméthylméthacrylate (PMMA),
et dans laquelle la selle en matière plastique (16) est reliée à l'autre couronne dentaire (13) en particulier à l'aide d'un agent adhésif.

7. Prothèse dentaire (1) selon l'une quelconque des revendications précédentes,
pour laquelle la couronne dentaire externe (2, 11, 12, 13) est maintenue par une structure en matière plastique (19), dans laquelle la structure en matière plastique (19) revêt au moins partiellement la couronne dentaire externe (2, 11, 12, 13).

8. Prothèse dentaire (1) selon la revendication 7,
pour laquelle la structure en matière plastique (19) est fabriquée en polyétheréthercétone (PEEK).

9. Prothèse dentaire (1) selon l'une quelconque des revendications précédentes, avec un dispositif de friction (F) qui est prévu afin d'être agencé entre la couronne dentaire interne (3, 14, 15, 17) et la couronne dentaire externe (2, 11, 12, 13) afin de définir une friction pour l'ajustement serré.

10. Prothèse dentaire (1) selon la revendication 9, pour laquelle
le dispositif de friction (F) comprend un guidage élastique et une vis, et le guidage et la vis sont configurés par coopération de telle manière qu'une dimension radiale du guidage dépende d'une profondeur de vissage de la vis dans le guidage.

11. Prothèse dentaire (1) selon la revendication 9, pour laquelle
le dispositif de friction (F) est une matrice de friction qui est fixée à la couronne dentaire externe, en particulier dans la cavité de la couronne dentaire externe.

12. Procédé de fabrication d'une prothèse dentaire (1) selon l'une quelconque des revendications 1 à 11,
pour lequel la couronne dentaire interne (3, 14, 15, 17) est fraisée en céramique et
pour lequel la couronne dentaire externe (2, 11, 12, 13) est fabriquée conjointement avec au moins deux autres couronnes dentaires contigües et en céramique, dans lequel la prothèse dentaire est configurée au moins partiellement comme un bridge amovible,
et une selle en matière plastique (16) sert d'appui pour l'autre couronne dentaire (13) sur une mâchoire et/ou gencive, dans lequel au moins l'une des autres couronnes dentaires (13) est reliée à la selle en matière plastique (16).

13. Procédé selon la revendication 12, pour lequel
la couronne dentaire externe (2, 11, 12) est fraisée d'un seul tenant conjointement avec au moins trois, en particulier de préférence plus de trois autres couronnes dentaires (13) contiguës.

14. Procédé selon la revendication 13, pour lequel
la selle en matière plastique (16) est fraisée en une matière plastique de revêtement, en particulier sur la base de polyméthylméthacrylate (PMMA) et est reliée par complémentarité de formes à la au moins une autre couronne dentaire (3), en particulier au moyen d'une liaison à rainure et languette (R) dans une zone de contact commune.
